# EUROPEAN PATENT APPLICATION

(11) **EP 4 617 716 A1**
(43) Date of publication of application: **17.09.2025**
(21) Application number: 25158216.9
(22) Date of filing: 17.02.2025
(51) Int. Cl.: G01S 7/481, G01B 9/02, G01S 7/497, G01S 17/36, G01S 17/58, G01S 17/875

(54) **FERRULE WITH WIDEBAND SPECTRUM SOURCE CHANNEL FOR ALIGNMENT ERROR MITIGATION AND SYSTEM DYNAMICS EVALUATION**

(30) Priority: 13.03.2024 US 202463564621 P; 13.08.2024 US 202418803224
(71) Applicant: Honeywell International Inc., Charlotte, NC 28202 (US)
(72) Inventor: PEKAREK, Jan, Charlotte, 28202 (US); DRASAL, Zbynek, Charlotte, 28202 (US); JANDAK, Mikulas, Charlotte, 28202 (US); POPELKA, Jan, Charlotte, 28202 (US); MARK, Robert, Charlotte, 28202 (US)
(74) Representative: Haseltine Lake Kempner LLP

(57) **Abstract**

Systems and methods are described herein for providing a ferrule with a wideband spectrum source channel for alignment error mitigation and system dynamics evaluation. In certain embodiments, a system includes a ferrule. The ferrule includes a first set of optical emitters, each of which emits a received optical signal from a ferrule surface. The ferrule also includes a second set of optical emitters, each of which emits a reference optical signal from the ferrule surface. Additionally, the ferrule includes at least one wideband optical emitter, which emits at least one wideband optical signal from the ferrule surface. Moreover, a processor uses the at least one wideband optical signal to account for variations in at least one of spatial position and angular alignment of the ferrule surface when identifying interference patterns that result from the reflected optical signal and the reference optical signal passing through an interferometer.

## Description

### CROSS-REFERENCE TO RELATED APPLICATIONS

This application claims the benefit of U.S. provisional application 63/564,621, filed on March 13, 2024, which is hereby incorporated herein by reference in its entirety.

### BACKGROUND

A light or laser detection and ranging (LIDAR) system may be used on a vehicle, where the LIDAR system may determine one or more state variables of the vehicle. These state variables may include, for example, speed, rate of climb or descent, angle of attack, and/or angle of sideslip. Frequently, LIDAR systems use an optical interferometer system to receive reflected light that forms and projects the received light as an optical interference pattern on an optical detector. Velocity may be derived from the interference pattern detected by the optical detector, for example, using techniques described in U.S. Patent No. 7,106,447, which is incorporated herein by reference in its entirety.

Some optical interferometer systems may employ structural supports (like ferrules) and optical processing components (such as lenses, optical detectors, optical filters, and Fabry-Perot etalons). When an optical interferometer includes a Fabry-Perot etalon, the etalon may include two separated optically clear components separated, *e.g*., by free space. An input surface of one of these optically clear components receives an input optical signal. An output surface of the second optically clear component then emits a Fabry-Perot etalon output optical signal. Each of the input and the output surfaces may be typically tilted around a first *(e.g.,* X) axis and offset at an angle with respect to a second *(e.g.,* Y) axis, which is orthogonal to the first axis. The first and the second axes are each orthogonal to a third *(e.g.,* Z) axis along which or in parallel with both the etalon input and the etalon output optical signals propagate. Due to the separation between the first and second optically clear components, the Fabry-Perot etalon output optical signal generates a desired interference pattern, which is emitted as the output optical signal. In implementations, where the input surface and the output surface are tilted, the tilting may diminish undesired optical effects.

Typically, three or more transmitted optical signals are each emitted to a different region outside of the vehicle. Hence, vector variable(s) for the vehicle may be determined. Conventionally, the three or more reflected optical signals and a reference optical signal are emitted from a conventional ferrule towards the Fabry-Perot etalon. Often, the reference optical signal is derived from an optical light source, *e.g.,* a laser, which is also configured to provide the three or more transmitted optical signals. A reflected optical signal is a portion of an emitted optical signal reflected from a region outside the aircraft and subsequently received by the LIDAR system. The reference optical signal and each reflected optical signal are separately projected from different locations on the ferrule to the input surface of the Fabry-Perot etalon. As a result, the Fabry-Perot etalon projects interference patterns (which are separate Fabry-Perot etalon output optical signals) at the same relative locations of the reference optical signal and each reflected optical signal.

To derive a velocity projection corresponding to a direction of a reflected optical signal, the interference patterns emitted at the relative locations of the reflected optical signal are compared with the interference pattern emitted at the relative location of the reference optical signal.

### SUMMARY

Systems and methods are described herein for providing a ferrule with a wideband spectrum source channel for alignment error mitigation and system dynamics evaluation. In certain embodiments, a system includes a ferrule. The ferrule includes a first set of optical emitters, each of which emits a received optical signal from a ferrule surface. The ferrule also includes a second set of optical emitters, each of which emits a reference optical signal from the ferrule surface. Additionally, the ferrule includes at least one wideband optical emitter, which emits at least one wideband optical signal from the ferrule surface. Moreover, a processor uses the at least one wideband optical signal to account for variations in at least one of spatial position and angular alignment of the ferrule surface when identifying interference patterns that result from the reflected optical signal and the reference optical signal passing through an interferometer.

### BRIEF DESCRIPTION OF THE DRAWINGS

Understanding that the drawings depict only exemplary embodiments and are not, therefore, to be considered limiting in scope, the exemplary embodiments will be described with additional specificity and detail through the use of the accompanying drawings, in which:
FIG. 1 illustrates a block diagram of one embodiment of a vehicle including a LIDAR system utilizing a ferrule according to embodiments of the invention.
FIG. 2 illustrates a diagram of one embodiment of an optical interferometer system including a ferrule according to embodiments of the invention;
FIG. 3 illustrates one embodiment of an interference pattern received by a detector according to embodiments of the invention;
FIGs. 4A-4C illustrates several examples of optical signal emitter configurations from a ferrule according to embodiments of the invention; and
FIG. 5 illustrates a flow diagram of an exemplary method for mitigating alignment errors and evaluating the effects of system dynamics on ferrule positions using wideband spectrum source channels according to embodiments of the invention.

In accordance with common practice, the various described features are not drawn to scale but are drawn to emphasize specific features relevant to the exemplary embodiments. Reference characters denote like elements throughout figures and text.

### DETAILED DESCRIPTION

In the following detailed description, reference is made to the accompanying drawings that form a part hereof, and in which is shown by way of illustration-specific illustrative embodiments. However, it is to be understood that other embodiments may be utilized and that structural, mechanical, and/or electrical changes may be made. Furthermore, each method presented in the drawing figures and the specification is not to be construed as limiting the order in which the individual steps may be performed. The following detailed description is not to be taken in a limiting sense.

Systems and methods described herein are drawn to a ferrule with a wideband spectrum source channel for alignment error mitigation and system dynamics evaluation. In certain embodiments, a system includes an input ferrule that incorporates multiple auxiliary fibers involving two different light sources. One light source is a narrowband light source that results in an interference pattern that can be used for phase shift measurements as in systems known to those with skill in the art. The second light source is a wideband spectrum light source that enables robust system alignment and monitoring of system dynamics over time due to changes in e.g. temperature and pressure.

In certain embodiments, the wideband light source, like an LED or other wideband spectrum light source, forms blob patterns of light instead of the interference patterns formed from detecting signals derived from the narrowband light source(s). As used herein, a blob pattern of light may refer to a light pattern having a substantially uniform intensity over a defined area. The light pattern may be circularly shaped, square shaped, or other shapes having a well-defined area. Thus, a blob pattern of light differs from the fringes found in interferometric patterns that vary substantially in intensity over the potential area where the interferometric patterns can occur. Because the blob pattern of light is circular, rectangular, or other defined and known shape, with substantially uniform light intensity across the defined shape, the location of the blob pattern of light may be more easily identified and located using familiar algorithms when compared to identifying and locating fringes in the interferometric patterns created by the coherent light. In particular, as the interferometric fringes can occur anywhere within a potential fringe area, it is difficult to determine the location of the fringe area based on solely observing the interferometric fringes.

Further, the locations of the interferometric fringes may change due to dynamic system alterations caused by variations in temperature, pressure, vibrations, shocks, and other environmental changes. These alterations may introduce variations in the locations of the interferometric fringes, which introduce additional complexity when determining the location of the interferometric fringes. To help accurately locate the position of the interferometric fringes, using wideband light sources enables the use of "blob-based" algorithms and processing techniques that can be used to detect mechanical motion and system dynamics effectively. Which information enables the accurate location of the interferometric fringes. For example, the algorithms and processing techniques can discern the tilt of both the ferrule and detector based on the number of wideband light signals passed from the ferrule to a Fabry-Perot etalon. In particular, incorporating a single signal from a wideband light source into the system allows for focus alignment. Incorporating two signals from one or more wideband light sources into the system allows for rotation, region of interest (ROI) mask findings, and center finding, which enables the defining of the expected locations of the interferometric fringes and facilitating signal processing/algorithm evaluation from the interferometric fringes. For tilt/tip alignment, a system may include three signals from one or more wideband light sources. Additionally, integrating incoherent wideband light sources into the ferrule design provides a cost-effective aid in suppressing system alignment errors and may also mitigate errors caused by system deformation from environmental changes (temperature, pressure, humidity, etc.) during system operation.

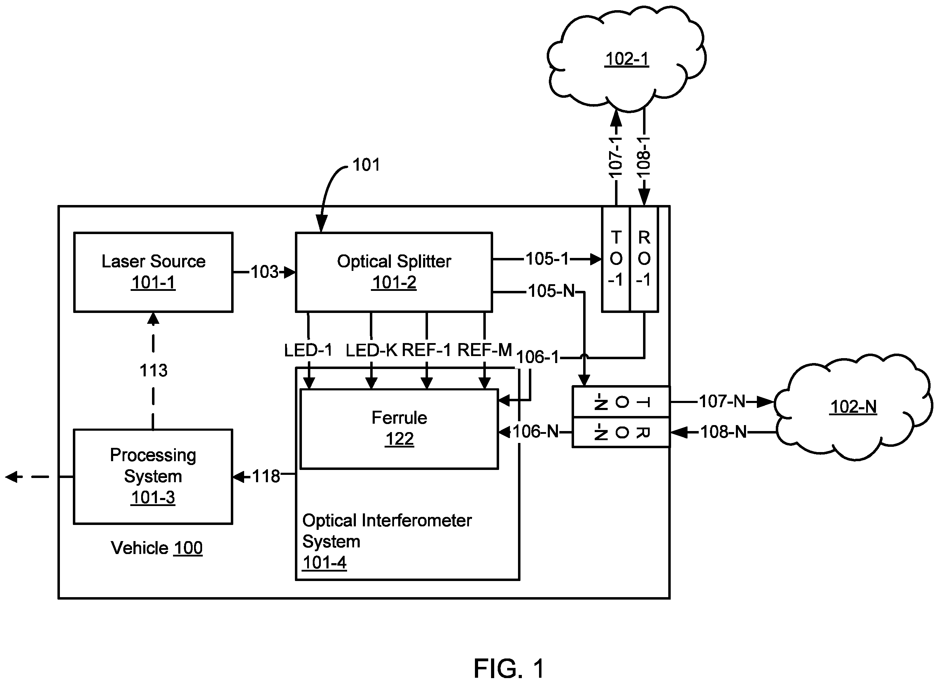

FIG. 1 illustrates a block diagram of one embodiment of a vehicle 100 that includes a LIDAR system 101 that uses a ferrule according to embodiments described herein. In some implementations, the LIDAR system 101 may be mounted on or in the vehicle 100. The vehicle 100 may be an airborne vehicle *(e.g.,* an aircraft), a pace-borne vehicle, a terrestrial vehicle, a waterborne vehicle, or any other type of vehicle.

The LIDAR system 101 includes a laser source 101-1, an optical splitter 101-2, one or more pairs of transmitting optical components and receiving optical components TO-1, RO-1 and TO-N, RO-N, an optical interferometer system 101-4, and a processing system 101-3. The ferrule described herein is incorporated as part of the optical interferometer system 101-4. The processing system 101-3 optionally comprises at least one processor circuit and at least one memory circuit. Optionally, the processing system 101-3 is configured to determine at least the velocity, *e.g.,* a vector velocity, of the vehicle 100 by analyzing interference patterns received from the optical interferometer system 101-4. Exemplary techniques for doing so are described in U.S. Patent No. 7,106,447. Optionally, the processing system 101-3 is further configured to control a power level of the laser source 101-1 using a control signal 113 and based on information in electrical signals 118 that represent an optical intensity of the total optical interference pattern detected within the optical interferometer system 101-4.

In certain embodiments, the laser source 101-1 is configured to transmit an optical signal 103 to the optical splitter 101-2. The laser source 101-1 may be a device capable of emitting narrowband optical signals, such as a laser emitting diode or other types of laser sources. The optical splitter 101-2 is configured to provide each of N transmission optical signals 105-1, 105-N to a unique one of N transmitting optical components TO-1, TO-N. N is an integer greater than or equal to one.

FIG. 1 illustrates for pedagogical purposes that the optical splitter 101-2 is further configured to provide each of M reference signals REF-1, REF-M to the optical interferometer system 101-4. M is an integer greater than or equal to one.

Also, the optical splitter 101-2 is configured to provide one or more wideband optical signals LED-1 - LED-K to the optical interferometer system 101-4. For example, the optical splitter may include one or more light emitting diodes (LED) that produce the one or more wideband optical signals. Alternatively, one or more of the LED-1 - LED-K may provide the light to the optical splitter 101-2, which then directs the light to the optical interferometer system 101-4. In a further alternative, the LED-1 - LED-K may provide the light directly to the optical interferometer system 101-4 or be incorporated as part of a ferrule 122 within the 101-4.

For example, a ferrule 122 may couple the wideband optical signals LED-1 - LED-K along with the reference signals (REF-1 and REF-M) and the reflected optical signals (106-1 and 106-N) into the optical interferometer system 101-4. The wideband optical signals LED-1 - LED-K can be used by the processing system 101-3 to locate the interference patterns detected from the optical interferometer system 101-4, which locations are subject to change due to operational variations, such as variations in temperature and pressure variations. In particular, the wideband optical signals LED-1 - LED-K may cause the formation of easily detectable blob patterns of light after passing through the optical interferometer system 101-4. More precisely, as the locations on a ferrule 122 of light sources, forming the interference pattern after passing through the Fabry-Perot etalon, are fixed in relation to the location of wideband sources on ferrule 122, by detecting the location and shape of the blob patterns, the processing system 101-3 may account for variations in the spatial position and angular alignment of the surface of a ferrule 122 in the interferometer system 101-4. Thus, the blob patterns produced by the wideband optical signals LED-1 - LED-K allow the processing system 101-3 to more accurately identify the location of the interference patterns while adjusting for changes due to temperature and pressure variations.

In some embodiments, the processing system 101-3 may be a combination of computation devices that can execute instructions that direct the one or more processors to process information related to detected optical signals. The one or more processors may be a single processor or a device that includes combinations of general-purpose processors, multi-core processors, multiple processors, dedicated circuitry, a graphics processing unit, and the like. The functions performed by the processors may be implemented using software, firmware, hardware, or any appropriate combination thereof. The processors and other computational devices may be supplemented by, or incorporated in, specially-designed application-specific integrated circuits (ASICs) or field programmable gate arrays (FPGAs). The processors and other computational devices can also include or function with software programs, firmware, or other computer-readable instructions for performing various process tasks, calculations, and control functions used in the present methods and systems.

The present methods may be implemented by computer-executable instructions, such as program modules or components executed by the processors or other computational devices. Generally, program modules include routines, programs, objects, data components, data structures, algorithms, and the like, which perform particular tasks or implement particular abstract data types.

In addition to the processors, the processing system 101-3 may include a memory. The memory may store data used by the processing system 101-3 to process information related to detected optical signals and executable instructions. Further, the memory may be any suitable computer-readable storage media that includes, for example, non-volatile memory devices, including semiconductor memory devices such as random access memory (RAM), read-only memory (ROM), electrically erasable programmable ROM (EEPROM), or flash memory devices; magnetic disks such as internal hard disks or removable disks; optical storage devices such as compact discs (CDs), digital versatile discs (DVDs), Blu-ray discs, or other media that can carry or store desired program code as computer-executable instructions or data structures.

Each of the N transmitting optical components TO-1, TO-N is paired with a unique one of the N receiving optical components RO-1, RO-N. Each of the N transmitting optical components TO-1, TO-N comprises at least one optical lens and/or at least one optical mirror. Each of the N transmitting optical components TO-1, TO-N is configured to, using a transmission optical signal, emit a transmitted optical signal 107-1, 107-N.

Each of the N transmitted optical signals 107-1, 107-N is emitted towards a region 102-1, 102-N, impinging upon the region 102-1, 102-N, and is scattered by components, *e.g*., molecules, particulates, etc., of a region 102-1, 102-N around the vehicle 100. Each region may be a spatial volume and may be formed by at least one gas, at least one solid, and/or at least one liquid. A portion of each transmitted optical signal, a reflected optical signal 108-1, 108-N, is reflected back to a corresponding receiving optical component RO-1, RO-N; optionally, such receiving optical component RO-1, RO-N is adjacent to a transmitting optical component TO-1, TO-N which transmitted the transmitted optical signal 107-1, 107-N whose reflected portion is received by the receiving optical component RO-1, RO-N. Each of the N receiving optical components RO-1, RO-N includes at least one lens and/or at least one mirror.

Each of the N receiving optical components RO-1, RO-N is configured to provide received optical signals 106-1, 106-N to the optical interferometer system 101-4 (having a ferrule 122 therein). Each of the N received optical signals 106-1, 106-N is derived by a unique receiving optical component from a unique reflected optical signal.

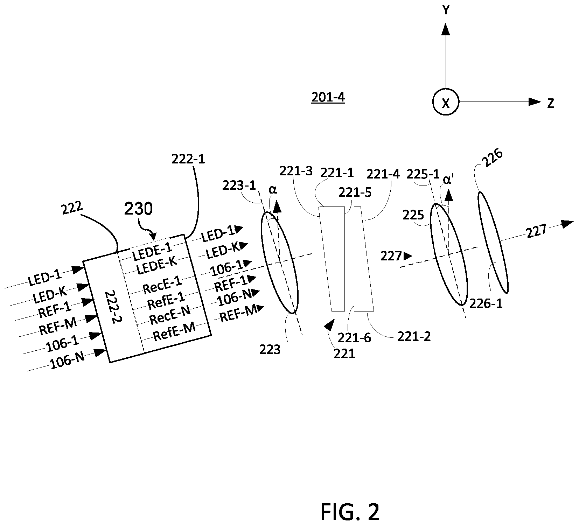

FIG. 2. illustrates a diagram of one embodiment of an optical interferometer system 201-4 including a ferrule 222 according to embodiments of the invention. The optical interferometer system 201-4 illustrates a detailed implementation of at least one implementation of the optical interferometer system 101-4. The illustrated optical interferometer system 201-4 includes the ferrule 222, at least one collimating lens 223, an optical interferometer 221, at least one imaging lens 225, and an optical sensor 226. The optical sensor 226 is configured to generate the electrical signals 118 representing an optical intensity of a total optical interference pattern.

The ferrule 222 is configured to receive the N received optical signals 106-1, 106-N, the M reference optical signals REF-1, REF-M, and K wideband optical signals LED-1 - LED-K through an input ferrule surface 222-2. As described herein, the ferrule 222 is a structural support for optical channels 230 that convey various optical signals within a system, such that the received optical signals are emitted from the optical channels 230 of the ferrule 222 and the ferrule 222 maintains the optical channels 230 at positions having known positions on the ferrule 222.

Each optical channel 230 of the ferrule 222 functions as an emitter that directs optical signals towards optical components for introduction into the interferometer 221, such as a Fabry-Perot etalon. In particular, the ferrule 222 includes a set of N receive optical emitters RecE-1, RecE-N each of which is configured to emit a unique received optical signal 106-1, 106-N toward an input surface 221-3 of the optical interferometer 221. The ferrule 222 also includes a set of M reference optical emitters RefE-1, RefE-M each of which is configured to emit a unique reference optical signal REF-1, REF-M to the input surface 221-3 of the optical interferometer 221. Optionally, a ferrule surface 222-1 of the ferrule 222 and each vertical axis 223-1 of each of the at least one collimating lenses 223 may be tilted around the first, *e.g.,* X, axis at an angle α with respect to the second, *e.g.,* Y, axis (orthogonal to the first axis); the first and second interior surfaces 221-5, 221-6 are parallel with one another. The at least one collimating lens 223 is configured to collimate the N received optical signals and the M reference signals emitted by the ferrule 222 prior to their becoming incident upon the input surface 221-3 of the optical interferometer 221.

The optical interferometer 221 includes a first piece of optically clear material 221-1 and a second piece of optically clear material 221-2, which are separated, *e.g*., by free space, air, etc. The first piece of optically clear material 221-1 includes a first interior surface 221-5, and the input surface 221-3, which is configured to receive the N received optical signals and the M reference signals collimated by and emitted by the at least one collimating lens. The second piece of optically clear material 221-2 includes a second interior surface 221-6, and an output surface 221-4 configured to emit interference patterns formed by the optical interferometer 221 of each of the N received optical signals and the M reference signals.

All of such interference patterns are referred to as total optical interference pattern 227 and are configured to be emitted from the output surface 221-4. Each piece of the optically clear material may be glass, quartz, or any other material that is optically clear at a wavelength of the optical signal 103 emitted by the laser source 101-1.

As shown, the wideband optical signals LED-1 and LED-K are coupled into the ferrule 222. For example, optical fibers may couple light emitted from LEDs or other light sources that emit wideband optical signals into the ferrule 222. The ferrule 222 additionally includes one or more wideband optical emitters LEDE-1 - LEDE-K that emit the wideband optical signals LED-1 - LED-K towards the optical interferometer 221. While only one LED is illustrated, multiple wideband optical signals can be coupled into the ferrule 222 and emitted by the ferrule 222. While the narrow-band light emitted from the N received optical signals and the M reference signals form interference patterns when passing through the Fabry-Perot etalon, the wideband optical signals LED-1 - LED-K do not form interference patterns after passing through the Fabry-Perot etalon.

In certain implementations, the total optical interference pattern 227 is transmitted from the output surface 221-4 to at least one imaging lens 225, which is configured to focus the total optical interference pattern 227 on the optical sensor 226. Also, the wideband optical signals LED-1 - LED-K are also transmitted from the output surface 221-4 to the at least one imaging lens 225, which focuses the wideband optical signals LED-1 - LED-K on the optical sensor 226.

Optionally, both the sensor surface 226-1 of the optical sensor 226 and a vertical axis 225-1 of each of the at least one focusing lenses 225 may be tilted around the first, *e.g.,* X, axis at an angle α' with respect to the second, *e.g.,* Y, axis (orthogonal to the first axis) so that the total optical interference pattern 227 is transmitted orthogonally from the first and the second interior surfaces 221-5, 221-6 of the optical interferometer 221. Optionally, angle α equals angle α'. However, both angles may differ.

The optical sensor 226 may be a complementary metal oxide semiconductor (CMOS) sensor, a charged coupled device (CCD) sensor, or any other type of optical sensor. The optical sensor 226 converts the total optical interference pattern 227 to electrical signals that convey information about (or representative of) the total optical interference pattern 227, including its constituent interference patterns described elsewhere herein. A surface 226-1 of the optical sensor 226 upon which the total optical interference pattern 227 is incident may or may not be parallel to a surface formed by the first and the second axes and is orthogonal to the third axis.

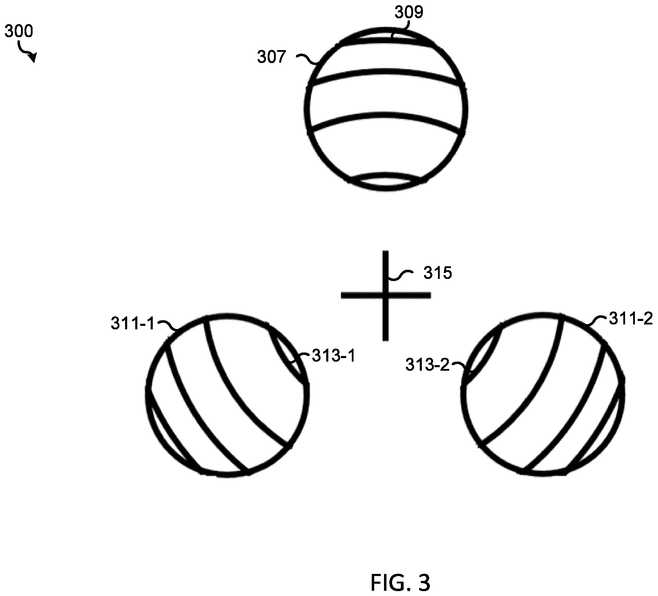

FIG. 3 illustrates one example of a potential detected interference patterns 300 of optical signals that have passed through the optical interferometer 221, where the optical signals were provided to the optical interferometer 221 from the ferrule 222. As shown, the different interference patterns may be associated with the position of the light emitted from the ferrule 222. For example, the optical channels 230 through the ferrule 222 may include at least one received optical channel and at least one reference channel. The reference channels emitted from the ferrule 222 are similar to the reference optical emitters (respectively RefE-1 or RefE-N). The received optical channels emitted from the ferrule 222 are similar to the received optical emitters (respectively RecE-1 or RecE-N).

As shown in FIG. 3, the detector may receive a one or more received optical interference patterns 309 and one or more reference channel interference patterns 313-1 and 313-2. To correctly process the received interference patterns, a processor (such as the processing system 101-3) identifies the location of the interference patterns so that the interference patterns and the information contained therein can be processed. As such, the processing system 101-3 may identify the expected location of the optical channels and overlay the interference patterns with the expected location of the optical channels. For example, the processing system 101-3 may identify a received optical channel expected location 307 and reference channel expected locations 311-1 and 311-2.

In certain embodiments, to identify the various expected locations, the processing system 101-3 may identify the location of an axis center 315 based on the locations of the received optical interference pattern 309 and the reference channel interference patterns 313-1 and 313-2. In particular, when the received optical interference pattern 309 and the reference channel interference patterns 313-1 and 313-2 are identified, the processing system 101-3 may identify the location of the axis center 315 at an expected in relation to the identified interference patterns.

However, the ferrule 222 is subject to various conditions that may affect the ability of the processing system 101-3 to accurately establish the expected locations with respect to the received interference patterns. For example, the positions and orientations of the ferrule 222, the optical interferometer 221, and sensor 226 may change with respect to each other in response to changes in temperature and pressure. Also, vibrations and shocks may alter the position and orientations of the various components. Further, imperfections in the fabrication and installation of the ferrule 222, optical interferometer 221, and sensor 226 may affect the ability of the processing system 101-3 to accurately establish the expected locations of the ferrule 222. For example, if the positions of the components change in relation to each other over time or suddenly, the relation of the expected locations to the axis center 315 also changes. As the relation of the expected locations varies, the processing system 101-3 may have algorithmic difficulty when attempting to accurately identify the expected locations of the received optical channel expected location 307 and the reference channel expected locations 311-1 and 311-2.

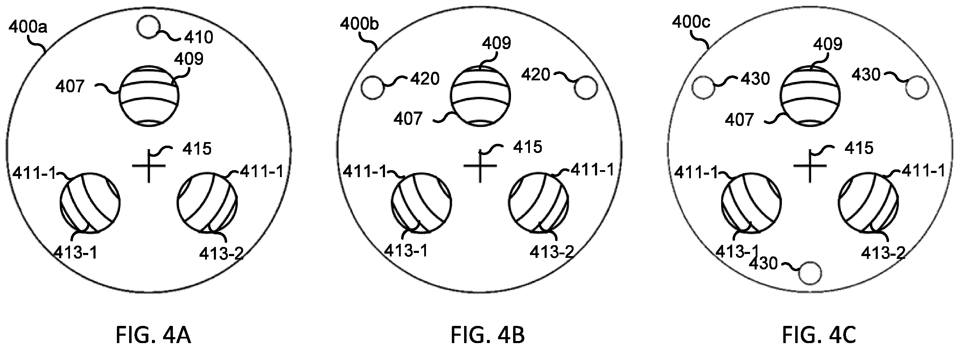

FIGs. 4A-4C illustrate various ferrule configurations for emitting optical signals. As shown, various configurations of wideband spectrum optical signals can be emitted from a ferrule 222 to more accurately identify the expected locations of the received optical channels and reference channels. For example, FIG. 4A illustrates a first configuration having a single wideband optical signal, FIG. 4B illustrates a second configuration having two wideband optical signals, and FIG. 4C illustrates a third configuration having three wideband optical signals. While configurations having one, two, or three wideband optical signals are shown, other configurations of wideband optical signals may help improve the accuracy when identifying the expected locations of the different optical channels in relation to detected interferometric patterns.

Further, the ferrule 222 emits optical signals that are associated with the interference patterns described above with respect to FIG. 3. For example, the ferrule 222 may emit received optical channel optical signals 407, which pass through the optical interferometer 221 to create the sky channel interference patterns 409-1 - 409-4. Also, the ferrule 222 may emit the reference channel optical signals 411-1 and 411-2, which passes through the optical interferometer 221 to create the reference channel interference patterns 313-1 and 313-2. Additionally, the interference patterns emitted by the ferrule 222 may be used to establish the location of the axis center 414.

As mentioned previously, by incorporating wideband light sources within the ferrule configuration, some of the optical signals emitted from the ferrule 222 will form blob patterns of light as compared to the interference patterns of the narrowband light sources. As the blob patterns of light are shapes with substantially uniform light intensity within defined boundaries and have fixed, known locations with respect to the received optical and reference channels, by detecting the location of the blob patterns using simple blob-based algorithms, a processor can determine information about the expected locations of the received optical and reference interference patterns. For example, a processor may identify the orientation, position, and tilt of the ferrule 222 based on the number and location of the detected blob patterns from the wideband light sources emitted from the ferrule 222. Examples of blob-based algorithms may include image processing algorithms like edge detection, or other image processing algorithms that can detect the presence of blob-type shapes.

The interferometric fringes may change due to dynamic system alterations caused by variations in temperature and pressure, and other environmental factors. The use of wideband light sources enables "blob-based" algorithms and processing techniques to detect mechanical motion and system dynamics effectively. For example, after the algorithms have identified the location of the blob patterns, the algorithms and processing techniques can discern the tilt of both the ferrule 222 and optical sensor 226. In particular, incorporating a single wideband light source into the system is sufficient for focus alignment. Incorporating two wideband light sources into the system allows rotation, ROI mask findings, and center finding. For tilt/tip (attitude) alignment, a system may include three wideband light sources.

FIG. 4A illustrates a potential configuration 400a of optical signals emitted by a ferrule, where the optical signal configuration includes a single wideband optical signal emitter 410. When the processing system can only receive the detected interference patterns, the variance in the interference patterns may cause difficulties with accurately controlling the focus of the interference patterns. With the single wideband optical signal emitter 410, a processing system may identify the resultant blob pattern shape and accurately determine whether the blob pattern shape is in or out of focus. Accordingly, the processing system may adjust the focal information in the signals until the focal information indicates that the blob pattern shape is in focus. By adjusting the focal information of the blob pattern from the single wideband optical signal emitter 410, the processing system also adjusts the focal information in the interference patterns with increasing accuracy.

FIG. 4B illustrates a potential configuration 400b of optical signals emitted by a ferrule 222, where the optical signal configuration includes two wideband optical signal emitters 420. Additionally, when the processing system can only receive the detected interference patterns, the interference patterns may cause difficulties with accurately determining the orientation of the received optical interference patterns 409 from the received optical channel optical signal 407 and the reference interference patterns 413-1 and 413-2 from the reference optical signal 411-1 and 411-2 with respect to the central interference pattern from the central channel optical signal 403. With the two wideband optical signal emitters 420, a processing system may identify the two resultant blob patterns and accurately determine the location of the two blob patterns. As the processing system knows the location of the two blob patterns with respect to the axis center 415, the processing system can adjust the orientation of the axis center 415 with respect to the blob patterns. By accurately determining the position/orientation of the blobs, the processing system can determine the expected locations of the received optical interference patterns 409 and the reference interference patterns 413-1 and 413-2 with respect to the axis center 415, in addition to correcting the focus.

FIG. 4C illustrates a potential configuration 400c of optical signals emitted by a ferrule 222, where the optical signal configuration includes three wideband optical signal emitters 430. Additionally, when the processing system can only receive the detected interference patterns, the interference patterns may cause difficulties in accurately determining whether the ferrule is tilted or tipped. With the three wideband optical signal emitters 430, a processing system may identify the three resultant blob patterns and accurately determine the attitude (tip/tilt) of the ferrule 222 based on the relation of the three blob patterns to each other, the shape of the blob patterns, and the location of the blob patterns. By accurately determining the attitude of the ferrule, the processing system can determine the expected locations and shapes of the interference patterns, along with the focus and orientation enabled by the single and double wideband optical signals.

As discussed, by more accurately identifying the focus, orientation, and attitude, the processing system can accurately adjust received signals in response to changes in environmental conditions or misalignment during manufacturing to accurately acquire information from the detected interference patterns.

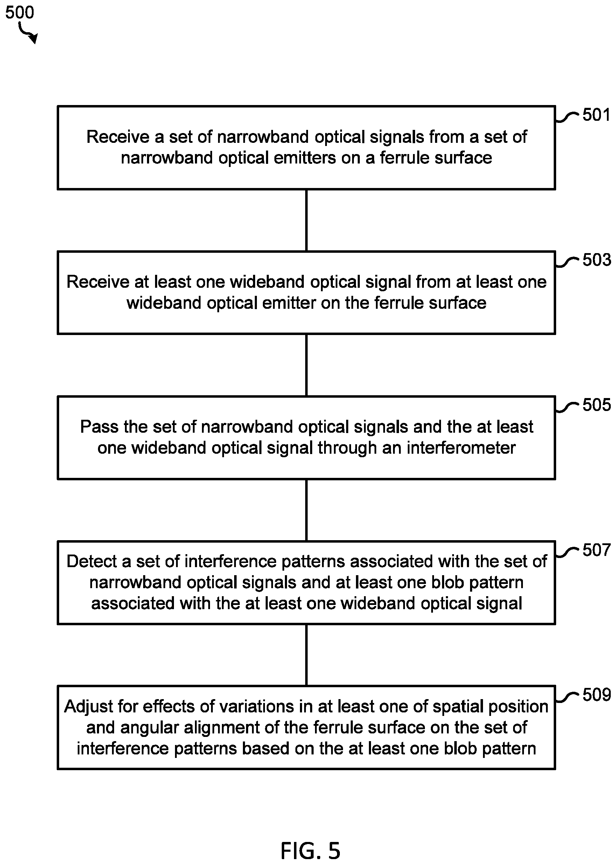

FIG. 5 is a flow chart diagram of a method 500 for mitigating alignment errors and evaluating the effects of system dynamics on ferrule positions using wideband spectrum source channels. In certain embodiments, the method 500 proceeds at 501, where a set of narrowband optical signals is received from a set of narrowband optical emitters on a ferrule surface. For example, when receiving the set of narrowband optical signals, a first set of optical signals in the set of narrowband optical signals may be transmitted from a vehicle into a region outside the vehicle. Particles and surfaces in the region outside the vehicle may reflect some of the emitted narrowband optical signals back to the vehicle, where the vehicle receives the first set of optical signals that have been reflected from the region. Additionally, the set of narrowband optical signals may include a second set of optical signals produced on the vehicle that are received directly by the ferrule as a set of reference signals.

Further, the method 500 proceeds at 503, where at least one wideband optical signal is received from at least one wideband optical emitter on the ferrule surface. For example, an LED or other wideband optical signal source on the vehicle may produce the wideband optical signal for reception by the ferrule, where the wideband optical signal received by the ferrule (or potentially incorporated into the ferrule) is emitted by a ferrule surface.

Additionally, the method 500 proceeds at 505, where the set of narrowband optical signals and the at least one wideband optical signal are passed through an interferometer. Also, the method 500 proceeds at 507, where a set of interference patterns associated with the set of narrowband optical signals and at least one blob pattern associated with the at least one wideband optical signal are detected.

Moreover, the method 500 proceeds at 509, where effects of variations in at least one of spatial position and angular alignment of the ferrule surface on the set of interference patterns are adjusted based on the detection of the at least one blob pattern. Further, a processor may determine different effects of the variations based on the number of separate blob patterns detected by an optical sensor. For example, when the optical sensor detects one or more blob patterns, a processor may adjust the effects of variations in the ferrule surface by adjusting focal information about the set of interference patterns. Further, when the optical sensor detects two or more blob patterns, a processor may adjust for the effects of variation in the ferrule surface by adjusting the expected locations of the interference patterns. Moreover, when the optical sensor detects three or more blob patterns, a processor may adjust for the effects of variation in the ferrule surface by adjusting attitude information for the ferrule surface.

### Example Embodiments

Example 1 includes a system comprising: a ferrule comprising: a first set of optical emitters, each of which emits a received optical signal from a ferrule surface; a second set of optical emitters, each of which emits a reference optical signal from the ferrule surface; and at least one wideband optical emitter, which emits at least one wideband optical signal from the ferrule surface; wherein a processor uses the at least one wideband optical signal to account for variations in at least one of spatial position and angular alignment of the ferrule surface when identifying interference patterns that result from the reflected optical signal and the reference optical signal passing through an interferometer.

Example 2 includes the system of Example 1, wherein the at least one wideband optical signal comprises a single wideband optical signal, and the processor adjusts focal information for the interference patterns based on a single blob pattern derived from the single wideband optical signal.

Example 3 includes the system of any of Examples 1-2, wherein the at least one wideband optical signal comprises two wideband optical signals, and the processor adjusts at least one of focal information for the interference patterns and expected locations of the interference patterns based on two blob patterns derived from the two wideband optical signals.

Example 4 includes the system of any of Examples 1-3, wherein the at least one wideband optical signal comprises three wideband optical signals, and the processor adjusts at least one of focal information for the interference patterns, expected locations of the interference patterns, and attitude information of the ferrule surface based on three blob patterns derived from the three wideband optical signals.

Example 5 includes the system of any of Examples 1-4, wherein the at least one wideband optical signal is produced by at least one LED and the at least one wideband optical signal produced by the at least one LED are provided to the at least one wideband optical emitter.

Example 6 includes a system comprising: a ferrule configured to support a plurality of optical channels, wherein the ferrule maintains positions of the plurality of optical channels in relation to one another; wherein each optical channel in the plurality of optical channels is configured to receive an optical signal in a plurality of optical signals; wherein the plurality of optical signals comprises a set of narrowband optical signals and a set of wideband optical signals.

Example 7 includes the system of Example 6, wherein a first set of optical signals in the set of narrowband optical signals is emitted from a vehicle and received as a set of received optical signals that is received by the plurality of optical channels; wherein a second set of optical signals in the set of narrowband optical signals is a set of reference signals that is received by the plurality of optical channels.

Example 8 includes the system of any of Examples 6-7, wherein the plurality of optical channels through the ferrule direct the plurality of optical signals towards an interferometer.

Example 9 includes the system of Example 8, where an optical sensor receives the plurality of optical signals after passing through the interferometer, wherein the set of narrowband optical signals are detected as interference patterns and the set of wideband optical signals are detected as blob patterns.

Example 10 includes the system of Example 9, wherein one or more processors are configured to determine information about the interference patterns based on the blob patterns.

Example 11 includes the system of Example 10, wherein the set of wideband optical signals comprises a single wideband optical signal, and the information determined by the one or more processors comprises focal information about the interference patterns based on a single blob pattern associated with the single wideband optical signal.

Example 12 includes the system of any of Examples 10-11, wherein the set of wideband optical signals comprises two wideband optical signals, and the information determined by the one or more processors comprises at least one of focal information about the interference patterns and expected locations of the interference patterns based on two blob patterns associated with the two wideband optical signals.

Example 13 includes the system of any of Examples 10-12, wherein the set of wideband optical signals comprises three wideband optical signals, and the information determined by the one or more processors comprises at least one of focal information about the interference patterns, expected locations of the interference patterns, and attitude information of the structural support based on three blob patterns associated with the three wideband optical signals.

Example 14 includes the system of any of Examples 6-13, wherein the set of wideband optical signals are produced by at least one laser emitting diode (LED) and the set of wideband optical signals produced by the LED are directed into associated optical channels in the plurality of optical channels of the structural support.

Example 15 includes a method comprising: receiving a set of narrowband optical signals from a set of narrowband optical emitters on a ferrule surface; receiving at least one wideband optical signal from at least one wideband optical emitter on the ferrule surface; passing the set of narrowband optical signals and the at least one wideband optical signal through an interferometer; detecting a set of interference patterns associated with the set of narrowband optical signals and at least one blob pattern associated with the at least one wideband optical signal; and adjusting for effects of variations in at least one of spatial position and angular alignment of the ferrule surface on the set of interference patterns based on the at least one blob pattern.

Example 16 includes the method of Example 15, wherein receiving the set of narrowband optical signals comprises: transmitting a first set of optical signals in the set of narrowband optical signals into a region outside a vehicle; receiving the first set of optical signals after being reflected from the region; and receiving a second set of optical signals in the set of narrowband optical signals as a set of reference signals.

Example 17 includes the method of any of Examples 15-16, wherein the at least one wideband optical signal comprises a single wideband optical signal, and adjusting for the effects of the variations further comprises adjusting focal information about the set of interference patterns based on a single blob pattern in the at least one blob pattern.

Example 18 includes the method of any of Examples 15-17, wherein the at least one wideband optical signal comprises two wideband optical signals, and adjusting for the effects of the variations further comprises adjusting at least one of focal information and expected locations of the set of interference patterns based on two blob patterns in the at least one blob pattern.

Example 19 includes the method of any of Examples 15-18, wherein the at least one wideband optical signal comprises three wideband optical signals, and adjusting for the effects of the variations further comprises adjusting at least one of focal information for the set of interference patterns, expected locations of the set of interference patterns, and attitude information of the ferrule surface based on three blob patterns in the at least one blob pattern.

Example 20 includes the method of any of Examples 15-19, wherein the at least one wideband optical signal is produced by at least one laser emitting diode (LED).

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system comprising:
a ferrule (122) configured to support a plurality of optical channels, wherein the ferrule (122) maintains positions of the plurality of optical channels in relation to one another;
wherein each optical channel in the plurality of optical channels is configured to receive an optical signal in a plurality of optical signals;
wherein the plurality of optical signals comprises a set of narrowband optical signals and a set of wideband optical signals.

2. The system of claim 1, wherein a first set of optical signals in the set of narrowband optical signals is emitted from a vehicle and received as a set of received optical signals that is received by the plurality of optical channels;
wherein a second set of optical signals in the set of narrowband optical signals is a set of reference signals that is received by the plurality of optical channels.

3. The system of claim 1, wherein the plurality of optical channels through the ferrule (122) direct the plurality of optical signals towards an interferometer (221), where an optical sensor receives the plurality of optical signals after passing through the interferometer (221);
wherein the set of narrowband optical signals are detected as interference patterns and the set of wideband optical signals are detected as blob patterns;
wherein one or more processors (101-3) are configured to determine information about the interference patterns based on the blob patterns.

4. The system of claim 3, wherein the set of wideband optical signals comprises a single wideband optical signal, and the information determined by the one or more processors (101-3) comprises focal information about the interference patterns based on a single blob pattern (410) associated with the single wideband optical signal.

5. The system of claim 3, wherein the set of wideband optical signals comprises two wideband optical signals, and the information determined by the one or more processors (101-3) comprises at least one of focal information about the interference patterns and expected locations of the interference patterns based on two blob patterns (420) associated with the two wideband optical signals.

6. The system of claim 3, wherein the set of wideband optical signals comprises three wideband optical signals, and the information determined by the one or more processors (101-3) comprises at least one of focal information about the interference patterns, expected locations of the interference patterns, and attitude information of the structural support based on three blob patterns (430) associated with the three wideband optical signals.

7. A method comprising:
receiving a set of narrowband optical signals from a set of narrowband optical emitters on a ferrule surface (222-1);
receiving at least one wideband optical signal from at least one wideband optical emitter on the ferrule surface (222-1);
passing the set of narrowband optical signals and the at least one wideband optical signal through an interferometer (221);
detecting a set of interference patterns associated with the set of narrowband optical signals and at least one blob pattern associated with the at least one wideband optical signal; and
adjusting for effects of variations in at least one of spatial position and angular alignment of the ferrule surface (222-1) on the set of interference patterns based on the at least one blob pattern.

8. The method of claim 7, wherein the at least one wideband optical signal comprises a single wideband optical signal, and adjusting for the effects of the variations further comprises adjusting focal information about the set of interference patterns based on a single blob pattern (410) in the at least one blob pattern.

9. The method of claim 7, wherein the at least one wideband optical signal comprises two wideband optical signals, and adjusting for the effects of the variations further comprises adjusting at least one of focal information and expected locations of the set of interference patterns based on two blob patterns (420) in the at least one blob pattern.

10. The method of claim 7, wherein the at least one wideband optical signal comprises three wideband optical signals, and adjusting for the effects of the variations further comprises adjusting at least one of focal information for the set of interference patterns, expected locations of the set of interference patterns, and attitude information of the ferrule surface based on three blob patterns (430) in the at least one blob pattern.
